# EUROPEAN PATENT SPECIFICATION

(11) **EP 4 248 242 B1**
(45) Date of publication and mention of the grant of the patent: **16.09.2026**
(21) Application number: 21814763.5
(22) Date of filing: 17.11.2021
(51) Int. Cl.: G01V 1/04, G01V 1/155

(54) **SEISMIC SHAKER**
SEISMISCHER SCHÜTTLER
VIBRATEUR SISMIQUE

(30) Priority: 17.11.2020 NL 2026908
(43) Date of publication of application: 27.09.2023
(73) Proprietor: Seismic Mechatronics B.V., 5507 TH Veldhoven (NL)
(72) Inventor: DAMS, Johannes Adrianus Antonius Theodorus, 5509 KD Veldhoven (NL); BOS, Jordan, 5331 DE Kerkdriel (NL); ENGELEN, Dirk Hendrikus Marinus, 5595 AD Leende (NL); VAN DIJK, Paulus Johannes Petrus, 5754 HX Deurne (NL); TIMMERS, Daan, 6003 CT Weert (NL)
(74) Representative: EP&C
(86) International application number: PCT/EP2021/081920
(87) International publication number: WO 2022/106441

(56) References cited:
- EP-A1- 2 549 300
- WO-A1-2014/196858
- US-A- 3 208 550
- US-A- 3 283 846
- US-A1- 2010 232 260
- US-A1- 2013 228 017

## Description

### Technical field:

The present invention relates to a seismic shaker, i.e. an apparatus configured to generate vibrations on the soil or the ground.

### Background:

Seismic shaker can e.g. be used in the monitoring and exploration of oil and gas reserves. Such a seismic shaker typically includes an actuator such as a hydraulic actuator which is configured to exert a force, typically a time-varying force, onto a base plate that is arranged on the soil or the ground. Such a seismic shaker may further comprise a reaction mass that is suspended or substantially isolated from the base plate, whereby the reaction mass is configured to receive a reaction force of the time-varying force. The time-varying force as applied may e.g. be a sinusoidal varying force having a frequency that varies over time, e.g. changing from 5 Hz to 200 Hz over a period of e.g. 10 to 20 sec.

For example, WO 2014/196858 A1 discloses a seismic shaker for exercising an excitation force on the ground has a base plate and a reaction mass connected to the base plate via a resilient structure and an actuator parallel thereto. A first comparison unit sends a difference signal which is the difference between a displacement measured by a displacement sensor and a set value of the displacement. A control unit calculates a correction value as a function of this difference signal, and sends it to a second comparison unit, which adds the correction value to a value of the excitation force to be exerted set in the second comparison unit. This second comparison unit is connected to a controller unit which controls the actuator. At low frequency this position control will track the ground force through the position set-point. The position feedback loop will be able to suppress the interfering force of the spring and any hysteresis.

It has further been proposed to apply electromagnetic actuators for generating the time-varying force. Such actuators enable an improved performance with respect to the frequency range, controllability of the generated time-varying force, and reduce self-induced noise. When such seismic shakers are scaled up to larger forces, e.g. > 20 kN, the robustness and/or reliability of known solutions may be insufficient.

### Summary of the invention:

It is an object of the present invention to provide a seismic shaker comprising an electromagnetic actuator for generating a time-varying force, which enables a more reliable and/or robust operation.

According to an aspect of the present invention, there is provided a seismic shaker comprising:
a base plate;
a column mounted onto the base plate;
a guiding mechanism; and
an electromagnetic motor arranged to generate a single force on the column in a first direction, such as a substantially vertical direction,
wherein the column is provided with a single stator,
wherein the electromagnetic motor is formed by a mover and the single stator arranged to interact with each other to generate the single force, and
the guiding mechanism comprising a plurality of rods connecting the column to the mover, the rods being rotatably connected to both the stator and the mover to enable a displacement of the mover relative to the column in the first direction and restrict a displacement in a plane substantially perpendicular to the first direction.

The column is provided with the single stator, which means that there is only one stator on arranged on the column. Because there is only one single stator arranged on the column, the electromagnetic motor acts as a single motor to generate the single force on the stator. Because only a single force is generated, the seismic shaker is able to shake the base plate more accurately and with improved repeatability. In comparison, some known seismic shakers use multiple actuators to generate forces on the column. Due to a mismatch in the coordination of those multiple actuators, the known seismic shakers perform less accurately. For example, due to the mismatch, the column is exposed to undesired bending, rotation and/or torsion.

By providing the plurality of rods, the mover can be guided over a desired displacement. The rods provide an accurate guiding mechanism that can be arranged in a relatively small volume. In combination with the use of the single stator, this allows for a smaller seismic shaker. In comparison, some known seismic shakers use leaf springs as a guiding mechanism. The leaf springs need to have sufficiently large thickness to withstand the stresses during operation of the seismic shaker. However, due to the large thickness, the leaf springs to have a large length to allow the leaf springs to flex over the desired distance of the mover. Large leaf springs may have a good lifetime, but consume a large space, whereas short leaf springs fail after a short amount of time. The rods as implemented in the invention provide a guiding mechanism with a desired range in a small amount of space with an improved lifetime.

The seismic shaker according to the present invention comprises a base plate. Such a base plate can e.g. be a rigid structure that is either solid or hollow, and is configured to be arranged on the ground at a location were a force is to be applied to the ground.

The seismic shaker according to the present invention further comprises an electromagnetic motor comprising a mover and a stator, whereby the stator is mounted to the base plate. In an embodiment, the electromagnetic motor as applied may e.g. be a synchronous motor, e.g. a permanent magnet motor. An electromagnetic motor typically comprises one or more coils, e.g. made from an electrical conductor such as Copper (Cu) or Aluminium (Al) which can cause a force to be generated between the mover and the stator, said force causing a relative displacement between the stator and the mover. In an embodiment of the present invention, the mover of the electromagnetic actuator serves as reaction mass or part of a reaction mass to receive a reaction force of the generated force. In an embodiment, the mover or reaction mass is supported on the base plate, e.g. via a vibration isolator such as a gas mount or air mount or other spring-like system. In an embodiment, multiple vibration isolators can be applied to support the mover or reaction mass onto the base plate.

In accordance with the present invention, the seismic shaker further comprises a guiding mechanism that is configured to enable a displacement of the mover relative to the stator in a first direction, e.g. a vertical direction and restrict or limit a displacement of the mover relative to the stator in a plane substantially perpendicular to the first direction. It can be pointed out that, in an embodiment, a small rotation of the mover relative to the stator may occur.

In accordance with the present invention, the guiding mechanism thus serves a similar purpose as a bearing such as a ball bearing or sliding bearing.

The guiding mechanism as applied in the present invention comprises a plurality of rods, which are discrete members that connect the stator to the mover.

In yet another embodiment, the rods can comprise one or more spherical bearings.

Such spherical bearings can e.g. be spherical plain bearings or elastic bearings comprising vulcanised rubber, or hole hinges, or spring hinges.

In an embodiment, the guiding mechanism comprises five or more discrete members, i.e. rods, connecting the stator to the mover. In an embodiment, the applied discrete members, i.e. rods, are configured to enable or allow a displacement of the mover relative to the stator in 1 degree of freedom, e.g. 1 translational degree of freedom, and limit a displacement of the mover relative to the stator in the remaining 5 degrees of freedom.

### Brief description of the drawings:

Figure 1 schematically shows a first embodiment of a seismic shaker according to the present invention.
Figure 2 schematically shows a second embodiment of a seismic shaker according the present invention.
Figure 3a schematically shows a plan view of a third embodiment of a seismic shaker according to the present invention.
Figure 3b schematically shows a cross-sectional view of a seismic shaker according to the present invention.
Figures 4a and 4b schematically show cross-sectional views of electromagnetic motors as can be applied in a seismic shaker according to the present invention.
Figures 5a and 5b schematically show frequency sweeps as can be applied by a seismic shaker according to the present invention.
Figure 6 schematically shows a first discrete element as can be applied in a seismic shaker according to the present invention.
Figure 7 schematically shows two cross-sectional views of base plates as can be applied in a seismic shaker according to the present invention.

### Detailed description:

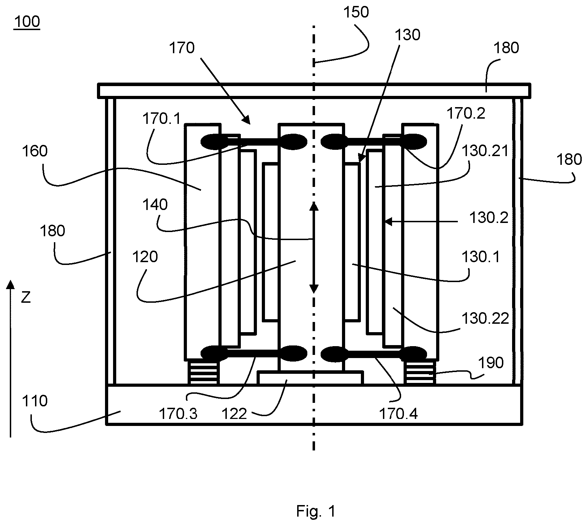

Figure 1 schematically shows a cross-sectional view of a first embodiment of a seismic shaker 100 according to the present invention.

The seismic shaker 100 as schematically shown comprises a base plate 110 onto which a central column 120 is mounted. The seismic shaker 100 further comprises an electromagnetic motor 130. The electromagnetic motor 130 comprises a single stator 130.1 mounted to the central column 120 and a mover 130.2. No other stator is arranged on the central column 120. In an embodiment, the single stator 130.1 can comprises a plurality of coils that are configured to co-operate with a plurality of permanent magnets of the mover 130.2, in order to generate a single force in the vertical direction (Z-direction), as indicated by the arrow 140. In such embodiment, the single stator 130.1 and mover 130.2 of the electromagnetic motor 130 may e.g. be axisymmetric about the axis 150 as shown. In such embodiment, the stator 130.1 may thus comprises a plurality of cylindrical coils arranged on the column 120 symmetrically about the axis 150. The column 120 may e.g. serve as back-iron for the magnetic flux generated by the permanent magnets and may thus be made of or comprise a ferromagnetic material. The mover 130.2 of the electromagnetic motor 130 comprises an array of permanent magnets 130.21 that are mounted in a housing 130.22 of the motor 130. Said housing 130.22 may e.g. serve as back-iron for the magnetic flux generated by the permanent magnet and may thus be made of or comprise a ferromagnetic material. The array of permanent magnets 130.21 may comprises a cylinder shaped structure of permanent magnets. More details on such an electromagnetic motor 130 are provided below. In the embodiment as shown, the mover 130.2 of the electromagnetic motor 130 is mounted to a reaction mass structure 160. In an embodiment, the reaction mass structure 160 can be an integral part of the housing 130.22 of the electromagnetic motor 130, or, phrased differently, the mover 130.2 of the electromagnetic motor 130 may serve as the reaction mass structure 160 or reaction mass. As such, when the electromagnetic motor 130 is powered, it will exert a force on the base plate 110, while a reaction force of said force will be generated on the mover 130.2. As will be appreciated by the skilled person, in an embodiment of the present invention, the array of permanent magnets 130.21 may be arranged on the column 120 while the array of coils 130.1 is mounted to the housing or back-iron 130.2.

In accordance with the present invention, the seismic shaker 100 according to the present invention further comprises a guiding mechanism 170 that is to enable a displacement of the mover 130.2 relative to the stator 130.1 in a substantially vertical direction, i.e. in the Z-direction as indicated and substantially restrict movement in the other 5 degrees of freedom. In particular, the guiding mechanism may be configured to substantially restrict a displacement in a horizontal plane, i.e. a plane substantially perpendicular to the indicated Z-direction. Note that a small rotation, e.g. approx. 0.1 - 0.2 degrees about the axis 150, may occur.

In accordance with the present invention, the guiding mechanism 170 comprises a plurality of discrete elements 170.1, 170.2, 170.3, 170.4 that connect the stator 130.1 of the electromagnetic motor 130 to the mover 130.2 of the electromagnetic motor 130. In the invention, the discrete elements 170.1-170.4 are rods that are rotatably connected to both the stator and the mover.

In yet another embodiment, the discrete elements can comprise one or more spherical bearings.

Such spherical bearings can e.g. be spherical plain bearings or elastic bearings comprising vulcanised rubber, or hole hinges, or spring hinges.

In an embodiment of the present invention, the discrete elements 170.1-170.4 of the guiding mechanism 170 are configured to enable a displacement of the mover relative to the stator in only one degree of freedom, e.g. a translation in the vertical direction or Z-direction while disabling or restricting a displacement of the mover relative to the stator in the other 5 degrees of freedom, i.e. two translational degrees of freedom in the horizontal plane or XY-plane and rotational degrees of freedom about the Z-axis, X-axis or Y-axis. Note that a small rotation about the Z-axis may occur and may be allowed.

In the embodiment as shown, the discrete elements 170.1-170.4 are connected, on one side, to the reaction mass structure 160 and, on the other side, the column 120. By doing so, the discrete elements 170.1-170.4 of the guiding mechanism 170 are configured to connect the stator 130.1 to the mover 130.2.

In an embodiment, as mentioned, the reaction mass structure 160 can be an integral part of the mover 130.2, or the mover 130.2 may serve as reaction mass. In such embodiment, the discrete elements can be connected directly to the mover.

In an embodiment of the present invention, the column 120 further comprises one or more frames or structures mounted to it, to facilitate a connection of the discrete elements to the stator 130.1 or the column 120.

The seismic shaker 100 as schematically shown further comprises an enclosure 180 enclosing the electromagnetic actuator 130.

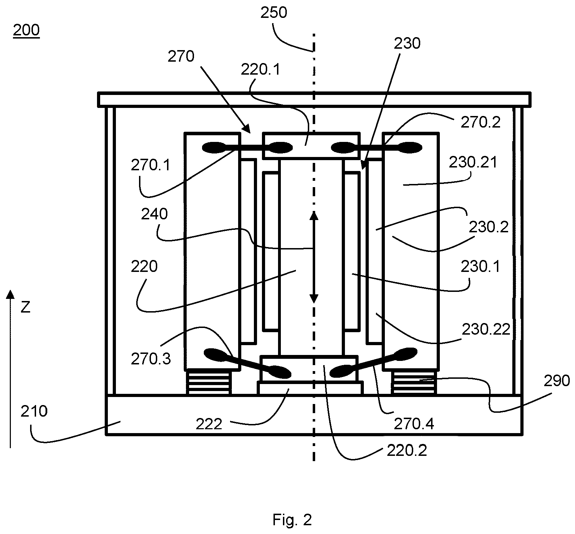

Figure 2 schematically shows a cross-sectional view of a second seismic shaker 200 according to the present invention.

The seismic shaker 200 as schematically shown comprises a base plate 210 onto which a central column 220 is mounted. The seismic shaker 200 further comprises an electromagnetic motor 230. The electromagnetic motor 230 comprises a single stator 230.1 mounted to the central column 120 and a mover 230.2. No other stator is mounted on the central column 120. In an embodiment, the stator 230.1 can comprises a plurality of coils that are configured to co-operate with a plurality of permanent magnets of the mover 230.2, in order to generate a force in the vertical direction (Z-direction), as indicated by the arrow 240. In such embodiment, the stator 230.1 and stator 230.2 of the electromagnetic motor 130 may e.g. be axisymmetric about the axis 150 as shown. In such embodiment, the stator 230.1 may thus comprises a plurality of cylindrical coils arranged on the column 220 symmetrically about the axis 250. The column 220 may e.g. serve as back-iron for the magnetic flux generated by the permanent magnet and may thus be made of or comprise a ferromagnetic material. The mover 230.2 of the electromagnetic motor 230 comprises an array of permanent magnets 230.22 that are mounted in a housing 230.21 of the motor 230. Said housing 230.21 may e.g. serve as back-iron for the magnetic flux generated by the permanent magnet and may thus be made of or comprise a ferromagnetic material. The array of permanent magnets 230.22 may comprises a cylinder shaped structure of permanent magnets. In the embodiment as shown, the mover 230.2 of the electromagnetic motor 230 also serves as a reaction mass. As such, when the electromagnetic motor 230 is powered, it will exert a force on the base plate 210, while a reaction force of said force will be generated on the mover 230.2. As will be appreciated by the skilled person, in an embodiment of the present invention, the array of permanent magnets 230.22 may be arranged on the column 220 while the array of coils 230.1 is mounted to the housing or back-iron 230.2.

In accordance with the present invention, the seismic shaker 200 according to the present invention further comprises a guiding mechanism 270 that is configured to enable a displacement of the mover 230.2 relative to the stator 230.1 in a substantially vertical direction, i.e. in the Z-direction as indicated and restrict a displacement in a horizontal plane, i.e. a plane substantially perpendicular to the indicated Z-direction, as also discussed above. In accordance with the present invention, the guiding mechanism 270 comprises a plurality of discrete elements 270.1, 270.2, 270.3, 270.4 that connect the stator 230.1 of the electromagnetic motor 230 to the mover 230.2 of the electromagnetic motor 230. In the invention, the discrete elements 270.1-270.4 are rods that are rotatably connected to both the stator and the mover. This can e.g. be realised by means of spherical bearings such as spherical elastic bearings or spherical plain bearings. In the embodiment as shown, the column 220 further comprises a top or upper frame or structure 220.1 and a bottom or lower frame or structure 220.2 to facilitate a connection of the discrete elements 270.1-270.4 to the column 220.

In an alternative embodiment the discrete elements may comprise one or more spherical bearings, e.g. elastic bearings or spherical plain bearings.

Similar to the first embodiment, the discrete elements 270.1-270.4 of the guiding mechanism 270 are configured to enable a displacement of the mover relative to the stator in only one degree of freedom, e.g. a translation in the vertical direction or Z-direction while prohibiting or restricting a displacement of the mover relative to the stator in the other 5 degrees of freedom, i.e. two translational degrees of freedom in the horizontal plane or XY-plane and rotational degrees of freedom about the Z-axis, X-axis or Y-axis.

In order to realise such guiding, the guiding mechanism, e.g. guiding mechanism 170 or 270, as applied in the present invention can comprise 5 or more discrete elements. By suitable application of 5 or more elements, a movement of the stator relative to the mover can be restricted or prohibited in 5 degrees of freedom, while allowing movement in a sixth degree of freedom, e.g. a translational degree of freedom.

In the embodiments as shown in Figures 1 and 2, the column 120 resp. 220 may correspond to the shaft of the electromagnetic motor as applied. Element 122, resp. 222 may e.g. be a flange or the like that serves as an interface to mount the shaft or column to the baseplate 110 resp. 210.

In the embodiments as shown in Figures 1 and 2, the reaction mass structure 160, resp. the housing 230.21 is mounted on the base frame via a low-stiffness support 190 resp. 290. Such a low-stiffness support may e.g. be a gas spring support, such as an air mount or the like. Preferably, the stiffness of such a low-stiffness support should be as low as possible, in particular in the direction of movement, i.e. the Z-direction in the embodiments of Figures 1 and 2. A low stiffness for the support provides that advantage that the required force for displacing the mover is minimised. It also results in a low eigenfrequency of the reaction mass structure. Preferably, the eigenfrequency should be lower than the lowest frequency of a frequency sweep that is performed by the seismic shaker. More details on such a frequency sweep are provided below. In an embodiment, the eigenfrequency should e.g. be < 2 Hz. It is further preferred to have the stiffness of the low-stiffness support vary as little as possible over the required stroke of the mover. Preferably the stiffness variation is less than 10% over the entire stroke. In order to realise this, a gas spring having a comparatively large volume and/or comparatively large height can be applied for the support.

With respect to the use of a gas spring support, it can further be pointed out that such a support will typically have no eigenfrequencies in the operating range of the frequency sweep, e.g. in the range from 1 - 250 Hz. A gas spring support can further be easily adjusted, by means of the gas pressure, and is comparatively compact.

Alternative supports such as mechanical springs may be applied as well. However, it can be pointed out that such supports may suffer from internal resonance frequencies adversely affecting the performance of the seismic shaker.

By applying a dedicated reaction mass structure and one or more frames or structures to the central column, an increased flexibility with respect to the shape, size, and position of the discrete elements can be obtained.

As an example, a cube-shaped or beam-shaped hollow structure may e.g. be used as a reaction mass structure that is connected to the housing of the electromagnetic motor, such housing typically having a cylindrical outer shape.

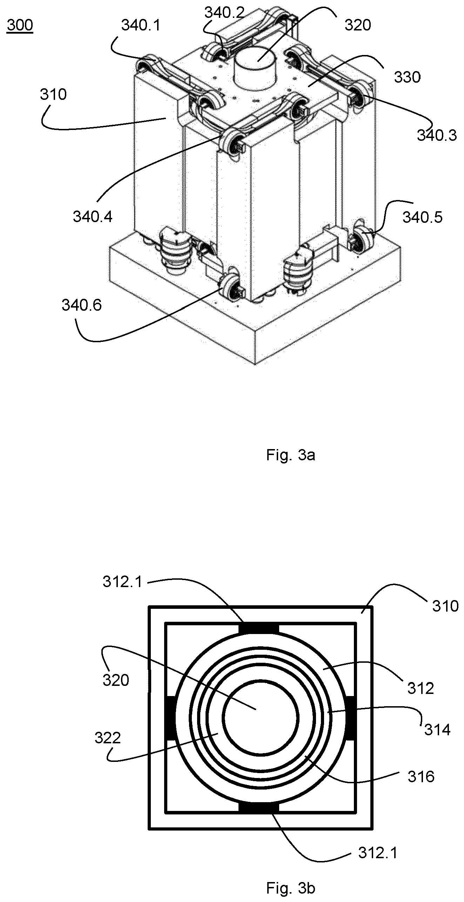

Figure 3a schematically shows a plan view of a third embodiment of a seismic shaker 300 according to the present invention where such a reaction mass structure is applied. The seismic shaker 300 comprises a tube-shaped reaction mass structure 310 which has a substantially square cross-section shaped such that it can receive an electromagnetic motor of which the shaft 320 protrudes a frame 330. In the embodiment as shown, a frame 330 is mounted to the shaft 320 of the electromagnetic motor of the shaker 300. The seismic shaker 330 further comprises a guiding mechanism which comprises a plurality of discrete element 340.1 - 340.6 connecting the frame 330 to the reaction mass structure 310. In the embodiment as shown, the mover of the electromagnetic motor is assumed to be connected to the reaction mass structure 310 such that the discrete elements 340.1-340.6 in fact provide a connection between the mover of the electromagnetic motor and the stator of the electromagnetic motor.

Figure 3b schematically shows a cross-sectional view of the seismic shaker 300 parallel to the XY-plane. Figure 3b schematically shows a cross-section of the tube-shaped reaction mass structure 310 which is connected to a housing 312, e.g. via interfaces 312.1 of the housing 312. Mounted inside the housing 312 is an array of permanent magnets 314 that is configured to generate a magnetic field to interact with a coil array 322 of the stator of the motor. Reference number 316 refers to a gap existing between the array of permanent magnets 314 and the coil array 322. The coil array 322 as shown is mounted to the shaft 320 of the motor.

The application of a guiding mechanism having a plurality of discrete elements connecting the stator to the mover provides, for the particular application of a seismic shaker, the advantage of being more robust. Compared to conventional solutions which e.g. apply a sliding bearing or a roller bearing, the application of the guiding mechanism of the present invention results in less friction or wear. Because of the comparatively small displacements during use of the mover relative to the stator, the lubrication of conventional solutions will become troublesome. The conventional bearing arrangement may also become polluted.

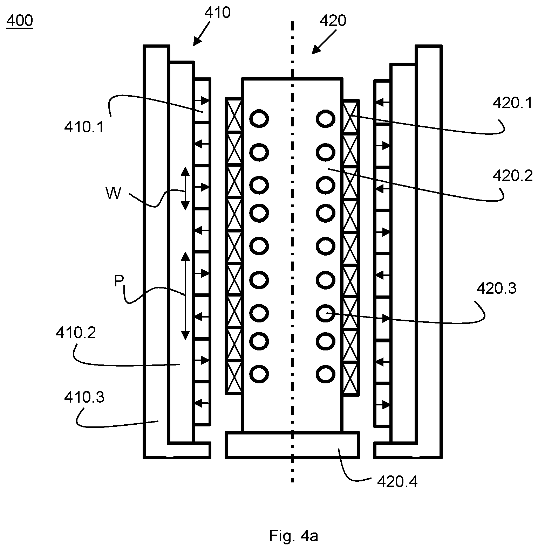

Figure 4a schematically shows a more detailed view on an electromagnetic motor as can be applied in a seismic shaker according to the present invention. Figure 4a schematically shows a cross-sectional view of an axisymmetric electromagnetic motor 400, the motor comprising a first part 410 and a second part 420. When applied in a seismic shaker according to the invention, the first part 410 may be referred to as the mover, the second part 420 may be referred to as the single stator. In the embodiment as shown, the first part of the electromagnetic motor comprises an array of permanent magnets 410.1, the permanent magnets 410.1 being configured to generate a spatially alternating magnet field along the Z-direction. The arrows in the permanent magnets 410.1 indicate the direction of magnetisation. In the embodiment as shown, the magnets 410.1 as applied have a width W, resulting a magnetic pitch P = 2*W.

In an embodiment of the present invention, the array of permanent magnets 410.1 may comprise a Hallbach array, in order to increase the magnetic field that interacts with the second part 420.

In the embodiment as shown, the array of permanent magnets 410.1 is mounted inside a cylinder 410.2 that is e.g. made or comprises a ferromagnetic material and thus serves as a back-iron for guiding the magnetic flux as generated by the permanent magnets 410.1. In the embodiment as shown, the cylinder 410.2 is mounted inside a housing 410.3 of the electromagnetic motor 400. The housing 410.3 may e.g. be provided with mounting elements or structures, for mounting the first part 410 of the motor to a reaction mass structure. It can be pointed out that, as also mentioned above, that the cylinder 410.2, serving as back-iron, and the housing 410.3 may be integral parts.

In the embodiment as shown, the second part 420 comprises an array of coils 420.1, e.g. cylindrical coils that are arranged about a cylindrical shaft 420.2. The cylindrical shaft 420.2 can e.g. be made or comprise a ferromagnetic material and thus serves as a back-iron for guiding the magnetic flux as generated by the permanent magnets 410.1 of the first part 410 and the magnetic flux generated by the array of coils 420.1. In an embodiment of the present invention, the array of coils 420.1 may e.g. be a multi-phase array of coils, e.g. a three-phase coil array, configured to be powered by a three-phase power supply. By suitable powering of the coil array, a force can be generated on the first part 410, resulting in a displacement of the first part 410 relative to the second part 420.

In the embodiment as shown, the second part 420 of the electromagnetic motor further comprises cooling channels 420.3 through which a cooling fluid can be arranged, in order to cool the coil array 420.1. A suitable coolant may e.g. be water. As will be appreciated, alternative means of cooling the coil array, when required, can be implemented as well as for example air or forced air cooling or 2-phase cryogenic cooling systems.

In the embodiment as shown, the shaft 420.2 is further provided with a flange or interface 420.4 which can be used to mount the motor 400 to a base frame such as base frame 110 or 210 shown above.

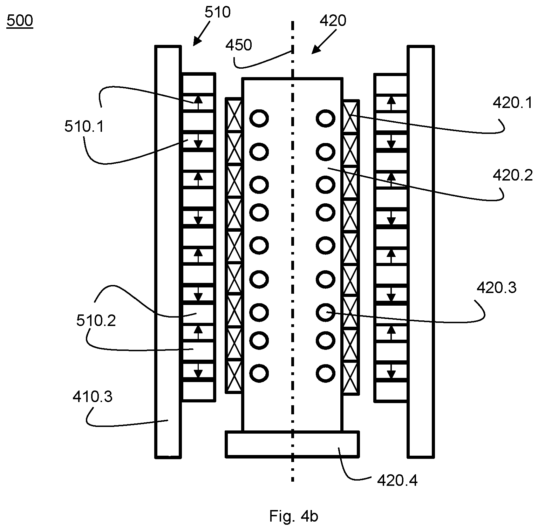

In the embodiment as shown in Figure 4a, the permanent magnets 410.1 are magnetised in a direction perpendicular to the axial direction of the motor. It can be pointed out that an alternative motor can be designed having permanent magnets magnetized in the axial direction. Such an embodiment is schematically shown in Figure 4b. Figure 4b schematically shows a cross-sectional view of an axisymmetric electromagnetic motor 500, the motor comprising a first part 510 and a second part 420, the second part 420 e.g. corresponding to the second part 420 in Figure 4a. When applied in a seismic shaker according to the invention, the first part 510 may be referred to as the mover, the second part 420 may be referred to as the stator. In the embodiment as shown, the first part of the electromagnetic motor comprises an array of permanent magnets 510.1, the permanent magnets 510.1 being configured to generate a spatially alternating magnet field along the Z-direction. The arrows in the permanent magnets 510.1 indicate the direction of magnetisation. In the embodiment as shown, the permanent magnets 510.1 are magnetized in the axial direction 450. In between adjacent magnets, ferromagnetic members 510.2 are provided for guiding the magnetic flux generated by the permanent magnets 510.1. These members 510.2 further guide the magnetic flux as generated towards the cylindrical shaft 420.2 serving as back-iron. The members 510.2 may also be referred to as pole-shoes.

In the embodiment as shown, the array of permanent magnets 410.1 is mounted inside a housing 510.3 of the electromagnetic motor 400. The housing 510.3 may e.g. be provided with mounting elements or structures, for mounting the first part 510 of the motor to a reaction mass structure. In order to avoid or mitigate leakage of magnetic flux, the housing 510.3 should preferably be made from a non-magnetic material, e.g. stainless steel or the like.

With respect to the type of electromagnetic motor that is applied, the following is worth mentioning:
It can be pointed out that in principle, a seismic shaker may be equipped with other types of electromagnetic motors for generating the required force. It can also be pointed out that a seismic shaker may in principle comprise multiple electromagnetic motors for generating said force, the multiple motors acting in parallel onto the base plate. For example, the base plate is provided with multiple columns. Each column is provided with a single stator. Each of the single stators is arranged to cooperate with a mover. The mover is, for example, arranged to cooperate with multiple single stators. In another example, two or more base plates are provided that are connectable to each other. Each of the base plates has a corresponding reaction mass structure, so there are two or more reaction mass structures provided. Each of the base plates has a column, wherein each column has a single stator. Each of the single stators cooperates with a mover on the corresponding reaction mass structure.

The electromagnetic motor as schematically shown in Figure 4 may be referred to as a tubular permanent magnet actuator or motor. It can be pointed out that this type of motor can be easily scaled to generate comparatively large force onto the base plate of the shaker. In particular, the type of motor as depicted in Figure 4 can e.g. be designed to generate a force of 50 kN or more.

As an alternative to the tubular motor as described, iron core, core-less or iron-less electromagnetic motors such as U-channel type of motors or Lorentz type of motors or actuators can be mentioned as well. It may however be pointed out that such motors or actuators may be more difficult to scale to comparatively large forces or to scale them to accommodate for the required displacement range. When such motors are considered, it may thus be required to apply multiple motors rather than only one motor, as in the present invention. The application of multiple motors, rather than only one, to generate the required force on the base plate, may however complicate the operation of the shaker in that a synchronisation of the motors may be required. The application of multiple motors may further increase the number of parts of the shaker, adversely affecting the robustness.

When applied in a seismic shaker, the power supply of the electromagnetic motor as applied can be configured to perform a so-called frequency sweep. During such a frequency sweep, the mover of the motor is displaced relative to the stator according to a time-varying displacement, e.g. a substantially sinusoidal displacement, with a varying frequency. Such a frequency sweep may e.g. start at a comparatively low frequency, e.g. in a range between 2 Hz and 5 Hz and end at a comparatively high frequency, e.g. 200 Hz - 250 Hz. In order to realise such a frequency sweep, the power supply as applied in the seismic shaker according to the invention may e.g. comprise a control unit for controlling the power supply, whereby the control unit is configured to control the power supply to perform the frequency sweep. In such embodiment, performing the frequency sweep may thus comprise generating a force by the electromagnetic motor, the force having a variable frequency in accordance with the frequency sweep.

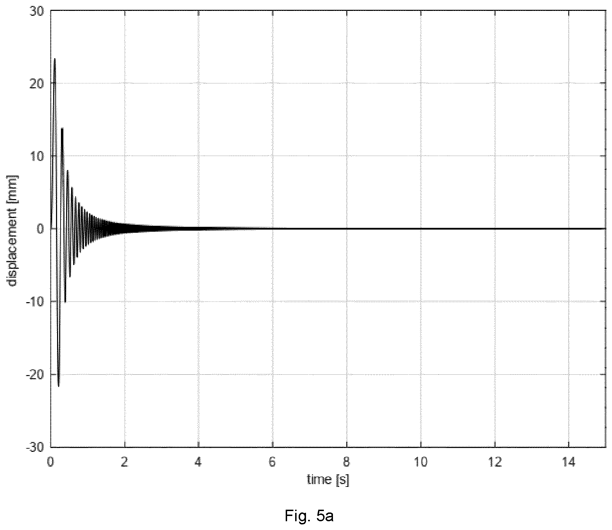

Figure 5a schematically shows a relative displacement of the mover of an electromagnetic motor during such a frequency sweep, as a function of time t. As can be seen, a frequency sweep typically starts with a comparatively low frequency which increases over time. For the frequency sweep as shown, the displacement has a maximum amplitude of approx. 25 mm. In general, the amplitude of the displacement during the frequency sweep may e.g. be in a range between 2 - 6 cm, e.g. in a range between 4-5 cm.

In an embodiment of the present invention, the magnetic pitch P of the electromagnetic motor as applied is selected to be substantially equal or smaller than the nominal displacement of the mover relative to the stator. By doing so, the thermal load or thermal dissipation of the coil array of the electromagnetic motor can be substantially evenly distributed over the different coils of the electromagnetic motor.

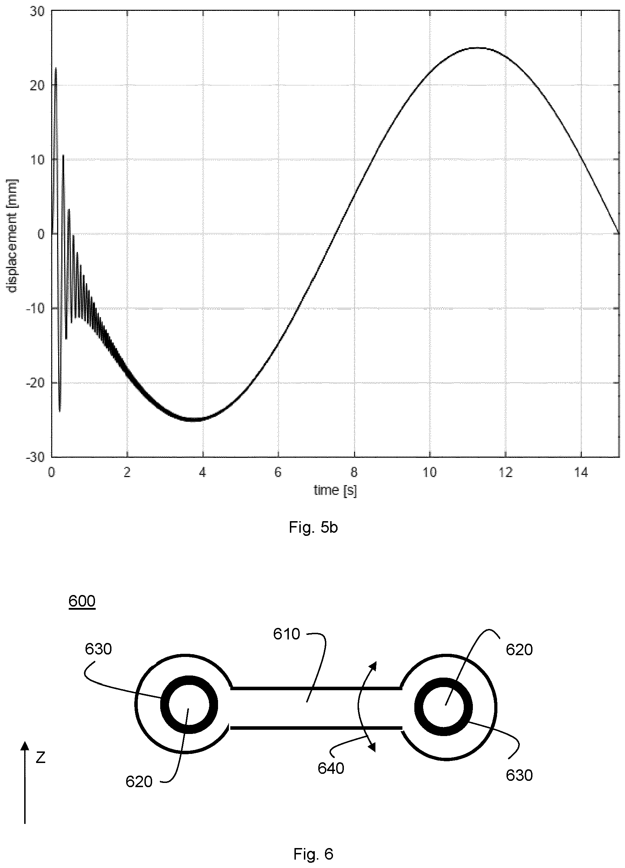

As can be seen from the typical frequency sweep, the displacement of the mover of the motor relative to the stator becomes very small at high frequencies. Operating the motor in such operating point, i.e. whereby the relative displacement of the mover vs. the stator is small, may result in an unbalanced thermal load of the motor, i.e. a thermal load whereby certain coils dissipate more than others. In order to avoid or mitigate this, it is proposed to superimpose a low-frequent displacement on the frequency sweep, in particular in the region where the amplitude of the frequency sweep is low. Figure 5b schematically shows a relative displacement of the mover of an electromagnetic motor during such a frequency sweep which includes a low-frequency displacement, as a function of time t. The corresponding low frequent movement of the mover with respect to the stator will more evenly distribute the average currents in the 3 phases of the power supply powering the motor.

In order to generate such a low-frequency displacement, superimposed on the frequency sweep, the control unit is configured to control the power supply to generate a low-frequency force by the electromagnetic motor, the low-frequency force causing a low-frequency displacement of the mover relative to the stator, during at least part of the frequency sweep. In an embodiment, the low-frequency displacement has a frequency that is significantly smaller than the lowest frequency or eigenfrequency of the frequency sweep. In an embodiment, the low-frequency displacement has a frequency smaller than 2 Hz. In an embodiment, the frequency of the low-frequency displacement can e.g. be 1/10 Hz, or 1/20 Hz or 1/30 Hz. In an embodiment, the low-frequency displacement has an amplitude that is correlated to the magnetic pitch P of the electromagnetic motor as applied.

In an embodiment, the seismic shaker comprises the vibration isolator. The mover serves as reaction mass and is supported by the base plate via the vibration isolator. The vibration isolator and the reaction mass form a dynamic system having an eigenfrequency. The low-frequent displacement has a frequency that is substantially equal to the eigenfrequency. By having the frequency of the low-frequent displacement substantially equal to the eigenfrequency, only a very limited amount of energy is required to perform the low-frequent displacement. As a result, the electromagnetic motor only needs to provide a small amount of additional energy to displace the mover according to the low-frequent displacement. This way, the low-frequent displacement evenly distributes the currents in the 3 phases of the power supply without significantly increasing the average currents.

In an embodiment, the low-frequent displacement comprises a non-sinusoidal displacement of the mover relative to the stator. For example, the low-frequent displacement is a linear displacement. For example, the low-frequent displacement causes the mover to move over time as a trapezoid wave or a triangular wave or a saw tooth wave. In a rectangular wave, the mover displaces in one direction, then waits for a certain amount of time, then the mover displaces in the opposite direction, and then waits again for a certain amount of time. In a triangular wave, the mover displaces with a constant velocity without waiting at the end of the displacement. In a saw tooth wave, the mover displaces with a high velocity in one direction, whereas the mover displaces with a low velocity in the opposite direction.

In an embodiment, the low-frequent displacement has an amplitude that is equal to or larger than half the magnetic pitch P of the electromagnetic motor. By moving the mover over a displacement of at least half the magnetic pitch P, the currents of the electromagnetic motor can be distributed over the 3 phases of the power supply. Preferably, the low-frequent displacement is performed in an amount of time, for example between 10-30 seconds, which is less than a thermal time constant of the electromagnetic motor.

The seismic shaker according to the present invention comprises a guiding mechanism that includes a plurality of rods that are configured to constrain a movement of the mover of the electromagnetic motor of the seismic shaker relative to the stator of the electromagnetic motor.

In an embodiment of the present invention, the guiding mechanism comprises a first set of discrete elements that is arranged to connect a top part of the stator of the electromagnetic motor to a top part of the mover of the electromagnetic motor and a second set of discrete elements that is arranged to connect a bottom part of the stator of the electromagnetic motor to a bottom part of the mover of the electromagnetic motor.

In this respect, it can be pointed out that the electromagnetic motor, when implemented in seismic shaker is assumed to be arranged with the longitudinal axis in the vertical direction. The lower or bottom part of the motor would then correspond to the motor part that is closest to the base plate of the seismic shaker, the top part of the motor would be most remote from the base plate. Referring to Figure 2, the lower or bottom part of the motor may e.g. include the flange or structure 220.2 whereas the top part of the motor includes the flange or structure 220.1.

In an embodiment of the present invention, the first set of discrete elements can comprise a plurality of rods that connect a top flange or structure of the stator of the motor to the mover of the motor. An example of such an arrangement can e.g. be seen in Figure 3a, whereby 4 rods are arranged to connect a top flange of the motor to the mover of the motor, via the reaction mass structure. In such embodiment, the second set of discrete elements may also comprise a plurality of rods that connect a bottom flange or structure of the stator of the motor to the mover of the motor.

In an embodiment, each set of discrete elements comprises 3 or more elements, e.g. 3 or 4 elements. In order to restrict the movement of the mover relative to the stator to only one degree of freedom, e.g. a translational degree of freedom in the vertical direction, a first set of 3 elements combined with a second set of 2 elements would be sufficient. However, it may be advantageous to have some redundancy in the set of discrete elements that is applied in the guiding mechanism of the seismic shaker according to the invention to anticipate on a failure or malfunctioning of one or more of the elements.

Figure 6 schematically shows a discrete element 600, in particular a rod-shaped element, as can be applied in a guiding mechanism for a seismic shaker according to the present invention. The discrete element 600 as schematically shown comprises a substantially rigid bar or rod 610 having an elongate shape and provided with through holes or apertures or eyes 620 at both ends. The through holes 620 are configured to receive bar or rod-shaped members that are connected or part of the mover and the stator of the motor. In the embodiment as shown, the through holes 620 are provided with ring-shaped or cylindrical-shaped members 630 that provide an interface between the rod 610 and the mover or stator. In an embodiment, the interface members 630 can e.g. be made or comprise a ductile material such as rubber or the like. In another embodiment the interface members could comprise Plain Spherical Bearings. When the through hole on the right is connected to the stator of the electromagnetic motor as applied, and the through hole on the left is connected to the mover, the discrete element 600 enables a displacement of the mover relative to the stator in the indicated vertical direction Z by allowing a rotation as indicated by the arrow 640. When the mover is displaced relative to the mover, e.g. in accordance with the frequency sweep as shown in Figure 5, the discrete element 600 will rotate about the bar or rod that is inserted in the right through hole. It can be pointed out that the angle of rotation will be comparatively small, considering a nominal displacement of the mover relative to the stator of a few cm in the vertical direction.

In accordance with the present invention, the seismic shaker comprises a base plate onto which the electromagnetic motor is mounted. It is desirably that the base plate is light and rigid. In order to realise this, the base plate as applied in a seismic shaker according to the present invention may have a hollow structure and may include one or more ribs or reinforcement ribs.

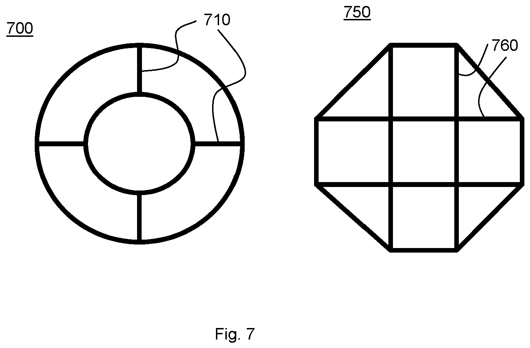

Figure 7 schematically shows some exemplary cross-sectional views of base plates that can be applied in the present invention. On the left side of Figure 7, a cross-section view of a first base plate 700 is schematically shown, the base plate 700 having a circular cross-section and is provided with ribs 710.

On the right side of Figure 7, a cross-section view of a second base plate 750 is schematically shown, the base plate 750 having an octagonal cross-section and is provided with ribs 760.

As will be appreciated, various other shapes such as square or hexagonal cross-sections can be devised as well. It can be pointed out that for the application of a seismic shaker, it is preferred to exert a force on the soil as if the force would originate from a point source. It is further desirable to avoid or limit the excitation of sub-harmonics or higher harmonic frequencies. As such, it is preferred that the base plate is both light and rigid.

In an embodiment, the seismic shaker according to the present invention further comprises a power supply for powering the electromagnetic motor and a control unit for controlling the power supply.

In such embodiment, the control unit can be configured to control the power supply to perform a frequency sweep. The power supply as applied in the seismic shaker according to the present invention may e.g. comprise a power converter configured to provide a suitable voltage or current to the electromagnetic motor, in order for the motor to perform the required frequency sweep or, in general, generate the required force characteristic. Such a power converter can e.g. convert an AC supply power, e.g. generated by a diesel-generator, to a variable frequency supply power. In an embodiment, the seismic shaker according to the invention can thus include an AC generator and a power converter. Alternatively, or in addition, the AC power supply may be provided by one or more batteries, e.g. rechargeable or chargeable batteries.

In an embodiment, the seismic shaker according to the present invention is equipped with one or more sensors or measurement devices. As an example, the seismic shaker may be equipped with one or more motion sensors such as accelerometers e.g. mounted to the base frame, the stator of the motor or the mover of the electromagnetic motor. An acceleration signal as obtained from such a sensor may e.g. be applied as feedback to the power supply that is powering the electromagnetic motor. The acceleration signal may e.g. be used to determine a position of the mover relative to the stator, e.g. by integration of the signal twice or may be used to determine a velocity of the mover relative to the stator, e.g. by integration of the signal once.

In an embodiment, the seismic shaker according to the invention comprises at least one acceleration sensor mounted to the base plate and at least one acceleration sensor mounted to the movable reaction mass or mover. Such an arrangement enables to estimate the force exerted on the soil and enables to estimate the quality of the force signal. Such an embodiment further enables the application of feedforward or feedback control of the motor. In an embodiment, the seismic shaker according to the embodiment, comprises a position sensor to measure a relative position between the base plate and the reaction mass or mover. Such a position sensor can be an absolute position sensor. Such a sensor can e.g. be an encoder based position sensor. Such encoders may e.g. be magnetic or magneto-strictive encoders. Optical sensors may however be considered as well, as well as LVDTs (Linear Variable Differential Transformer). The measurement signal of such a position sensor can e.g. be applied to control the commutation of the electromagnetic motor. It may also be applied for feedback control, e.g. low-frequency feedback control.

In the embodiments of the seismic shaker according to the present invention as shown in Figures 1 to 4b, the seismic shaker is oriented so as to generate a substantially vertical force onto the soil. As will be appreciated by the skilled person, the seismic shaker may also be oriented in such manner as to generate substantially horizontal forces onto the soil.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly, and not necessarily mechanically.

A single processor or other unit may fulfil the functions of several items recited in the claims.

## Claims

1. Seismic shaker (100, 200, 300) comprising:
a base plate (110, 210, 700, 750);
a column (120, 220) mounted onto the base plate;
a guiding mechanism (170, 270); and
an electromagnetic motor (130, 230, 400, 500) arranged to generate a single force on the column in a first direction such as a substantially vertical direction (Z),
wherein the column is provided with a single stator (130.1, 230.1),
wherein the electromagnetic motor is formed by a mover (130.2, 230.2) and the single stator arranged to interact with each other to generate the single force, and
wherein the guiding mechanism comprises a plurality of rods (170.1-170.4, 270.1-270.4) connecting the column to the mover,
**characterized in that** the rods are rotatably connected to both the stator and the mover to enable a displacement of the mover relative to the column in the first direction and restrict a displacement in a plane substantially perpendicular to the first direction.

2. The seismic shaker according to claim 1, wherein the plurality of rods comprises through holes (620) provided with interface members (630) that provide an interface between the rods and the mover or stator, wherein the interface members comprise a ductile material.

3. The seismic shaker according to any one of the preceding claims, wherein the plurality of rods comprises one or more spherical bearings and optionally, wherein the spherical bearings are spherical plain bearings.

4. The seismic shaker according to any one of the preceding claims, wherein the single stator is rigidly mounted to the column, and wherein the column is rigidly mounted to the base plate and optionally, wherein the baseplate comprises a substantially hollow ribbed structure.

5. The seismic shaker according to any one of the preceding claims, wherein the column comprises a bottom flange and a top flange, the guiding mechanism comprising a first plurality of rods connecting the top flange to the mover and a second plurality of rods connecting the bottom flange to the mover and optionally, wherein the single stator is arranged between the top flange and the bottom flange.

6. The seismic shaker according to any of the preceding claims, wherein the single stator comprises an array of coils (130.1, 230.1 420.1) arranged along the first direction and the mover comprising an array of permanent magnets (130.21, 230.22, 314, 410.1, 510.1) arranged along the first direction.

7. The seismic shaker according to any of the preceding claims, comprising a vibration isolator, wherein the mover serves as reaction mass and is supported by the base plate via the vibration isolator and optionally, wherein the vibration isolator comprises a gas mount.

8. The seismic shaker according to claim 7, wherein the vibration isolator comprises a plurality of vibration isolators arranged on the base plate.

9. The seismic shaker according to any of the preceding claims, further comprising a power supply for powering the electromagnetic motor and a control unit for controlling the power supply, wherein the control unit is configured to the control the power supply to perform a frequency sweep and optionally, wherein performing a frequency sweep comprises generating a force by the electromagnetic motor, the force having a variable frequency in accordance with the frequency sweep.

10. The seismic shaker according to claim 9, wherein the control unit is configured to perform the frequency sweep by superimposing a low-frequent displacement on the frequency sweep and optionally, wherein the low-frequent displacement has a frequency that is smaller than a lowest frequency of the frequency sweep.

11. The seismic shaker according to claim 10, comprising a vibration isolator, wherein the mover serves as reaction mass and is supported by the base plate via the vibration isolator,
wherein the vibration isolator and the reaction mass form a dynamic system having an eigenfrequency,
wherein the low-frequent displacement has a frequency that is substantially equal to the eigenfrequency and optionally,
wherein the low-frequent displacement comprises a non-sinusoidal displacement of the mover relative to the stator and/or the low-frequent displacement has an amplitude that is equal to or larger than half a magnetic pitch of the electromagnetic motor.

12. The seismic shaker according to any one of claims 9-11, wherein the power supply is a three-phase power supply.

13. The seismic shaker according to any one of claims 9-12, further comprising a first motion sensor mounted to the mover and/or a second motion sensor mounted to the stator.

14. The seismic shaker according to any of the preceding claims, further comprising a position measurement system configured to generate a position signal representing a position of the mover relative to the stator in the vertical direction.

15. The seismic shaker according to claim 13, wherein the control unit is configured to control the power supply based on a motion sensor signal received from the first motion sensor and/or the second motion sensor and optionally, wherein the control unit is configured to control the power supply based on the position signal.

## Patentansprüche

1. Seismischer Schüttler (100, 200, 300), umfassend:
eine Grundplatte (110, 210, 700, 750);
eine Säule (120, 220), die auf der Grundplatte montiert ist;
einen Führungsmechanismus (170, 270); und
einen elektromagnetischen Motor (130, 230, 400, 500), der dazu ausgelegt ist, eine einzige Kraft auf die Säule in einer ersten Richtung, wie etwa einer im Wesentlichen vertikalen Richtung (Z), zu erzeugen,
wobei die Säule mit einem einzigen Stator (130.1, 230.1) versehen ist,
wobei der elektromagnetische Motor durch einen Läufer (130.2, 230.2) und den einzigen Stator gebildet ist, die dazu angeordnet sind, miteinander zu interagieren, um die einzige Kraft zu erzeugen, und
wobei der Führungsmechanismus eine Mehrzahl von Stangen (170.1-170.4, 270.1-270.4) umfasst, die die Säule mit dem Läufer verbinden,
**dadurch gekennzeichnet, dass** die Stangen sowohl mit dem Stator als auch mit dem Läufer drehbar verbunden sind, um eine Verschiebung des Läufers relativ zur Säule in der ersten Richtung zu ermöglichen und eine Verschiebung in einer Ebene im Wesentlichen senkrecht zur ersten Richtung zu beschränken.

2. Seismischer Schüttler nach Anspruch 1, wobei die Mehrzahl von Stangen Durchgangslöcher (620) umfasst, die mit Schnittstellenelementen (630) versehen sind, die eine Schnittstelle zwischen den Stangen und dem Läufer oder dem Stator bereitstellen, wobei die Schnittstellenelemente ein duktiles Material umfassen.

3. Seismischer Schüttler nach einem der vorhergehenden Ansprüche, wobei die Mehrzahl von Stangen ein oder mehrere sphärische Lager umfasst und wobei optional die sphärischen Lager Gelenklager sind.

4. Seismischer Schüttler nach einem der vorhergehenden Ansprüche, wobei der einzige Stator starr an der Säule montiert ist und wobei die Säule starr an der Grundplatte montiert ist und wobei optional die Grundplatte eine im Wesentlichen hohle gerippte Struktur umfasst.

5. Seismischer Schüttler nach einem der vorhergehenden Ansprüche, wobei die Säule einen unteren Flansch und einen oberen Flansch umfasst, wobei der Führungsmechanismus eine erste Mehrzahl von Stangen umfasst, die den oberen Flansch mit dem Läufer verbinden, und eine zweite Mehrzahl von Stangen, die den unteren Flansch mit dem Läufer verbinden, und wobei optional der einzige Stator zwischen dem oberen Flansch und dem unteren Flansch angeordnet ist.

6. Seismischer Schüttler nach einem der vorhergehenden Ansprüche, wobei der einzige Stator eine Anordnung von Spulen (130.1, 230.1, 420.1) umfasst, die in der ersten Richtung aufeinanderfolgend angeordnet sind, und wobei der Läufer eine Anordnung von Permanentmagneten (130.21, 230.22, 314, 410.1, 510.1) umfasst, die in der ersten Richtung aufeinanderfolgend angeordnet sind.

7. Seismischer Schüttler nach einem der vorhergehenden Ansprüche, umfassend einen Vibrationsisolator, wobei der Läufer als Reaktionsmasse dient und über den Vibrationsisolator von der Grundplatte getragen wird und wobei optional der Vibrationsisolator eine Gaslagerung umfasst.

8. Seismischer Schüttler nach Anspruch 7, wobei der Vibrationsisolator eine Mehrzahl von Vibrationsisolatoren umfasst, die auf der Grundplatte angeordnet sind.

9. Seismischer Schüttler nach einem der vorhergehenden Ansprüche, der ferner eine Stromversorgung zum Versorgen des elektromagnetischen Motors mit Strom und eine Steuereinheit zum Steuern der Stromversorgung umfasst, wobei die Steuereinheit dazu ausgelegt ist, die Stromversorgung zum Durchführen eines Frequenzdurchlaufs zu steuern, und wobei optional das Durchführen eines Frequenzdurchlaufs das Erzeugen einer Kraft durch den elektromagnetischen Motor umfasst, wobei die Kraft eine variable Frequenz gemäß dem Frequenzdurchlauf aufweist.

10. Seismischer Schüttler nach Anspruch 9, wobei die Steuereinheit dazu ausgelegt ist, den Frequenzdurchlauf durch Überlagern des Frequenzdurchlaufs mit einer niederfrequenten Verschiebung durchzuführen, und wobei optional die niederfrequente Verschiebung eine Frequenz aufweist, die kleiner als eine niedrigste Frequenz des Frequenzdurchlaufs ist.

11. Seismischer Schüttler nach Anspruch 10, umfassend einen Vibrationsisolator, wobei der Läufer als Reaktionsmasse dient und über den Vibrationsisolator von der Grundplatte getragen wird,
wobei der Vibrationsisolator und die Reaktionsmasse ein dynamisches System mit einer Eigenfrequenz bilden,
wobei die niederfrequente Verschiebung eine Frequenz aufweist, die im Wesentlichen gleich der Eigenfrequenz ist, und
wobei optional die niederfrequente Verschiebung eine nichtsinusförmige Verschiebung des Läufers relativ zum Stator umfasst und/oder die niederfrequente Verschiebung eine Amplitude aufweist, die gleich oder größer als eine halbe Polteilung des elektromagnetischen Motors ist.

12. Seismischer Schüttler nach einem der Ansprüche 9-11, wobei die Stromversorgung eine Drehstromversorgung ist.

13. Seismischer Schüttler nach einem der Ansprüche 9-12, ferner umfassend einen ersten Bewegungssensor, der am Läufer montiert ist, und/oder einen zweiten Bewegungssensor, der am Stator montiert ist.

14. Seismischer Schüttler nach einem der vorhergehenden Ansprüche, ferner umfassend ein Positionsmesssystem, das dazu ausgelegt ist, ein Positionssignal zu erzeugen, das eine Position des Läufers relativ zum Stator in der vertikalen Richtung repräsentiert.

15. Seismischer Schüttler nach Anspruch 13, wobei die Steuereinheit dazu ausgelegt ist, die Stromversorgung basierend auf einem Bewegungssensorsignal zu steuern, das vom ersten Bewegungssensor und/oder zweiten Bewegungssensor empfangen wird, und wobei optional die Steuereinheit dazu ausgelegt ist, die Stromversorgung basierend auf dem Positionssignal zu steuern.

## Revendications

1. Vibrateur sismique (100, 200, 300) comprenant :
une plaque de base (110, 210, 700, 750) ;
une colonne (120, 220) montée sur la plaque de base ;
un mécanisme de guidage (170, 270) ; et
un moteur électromagnétique (130, 230, 400, 500) agencé pour générer une force unique sur la colonne dans une première direction telle qu'une direction sensiblement verticale (Z),
dans lequel la colonne est pourvue d'un stator unique (130.1, 230.1), dans lequel le moteur électromagnétique est formé par un moteur (130.2, 230.2) et le stator unique agencés pour interagir l'un avec l'autre pour générer la force unique, et
dans lequel le mécanisme de guidage comprend une pluralité de tiges (170.1-170.4, 270.1-270.4) reliant la colonne au moteur,
**caractérisé en ce que** les tiges sont reliées rotatives à la fois au stator et au moteur pour permettre un déplacement du moteur par rapport à la colonne dans la première direction et limiter un déplacement dans un plan sensiblement perpendiculaire à la première direction.

2. Vibrateur sismique selon la revendication 1, dans lequel les tiges de la pluralité de tiges comprennent des trous traversants (620) pourvus d'éléments d'interface (630) qui fournissent une interface entre les tiges et le moteur ou stator, dans lequel les éléments d'interface comprennent un matériau ductile.

3. Vibrateur sismique selon l'une quelconque des revendications précédentes, dans lequel les tiges de la pluralité de tiges comprennent un ou plusieurs paliers sphériques et facultativement, dans lequel les paliers sphériques sont des paliers lisses sphériques.

4. Vibrateur sismique selon l'une quelconque des revendications précédentes, dans lequel le stator unique est monté de façon rigide sur la colonne, et dans lequel la colonne est montée de façon rigide sur la plaque de base et facultativement, dans lequel la plaque de base comprend une structure nervurée sensiblement creuse.

5. Vibrateur sismique selon l'une quelconque des revendications précédentes, dans lequel la colonne comprend une bride inférieure et une bride supérieure, le mécanisme de guidage comprenant une première pluralité de tiges reliant la bride supérieure au moteur et une seconde pluralité de tiges reliant la bride inférieure au moteur et facultativement, dans lequel le stator unique est disposé entre la bride supérieure et la bride inférieure.

6. Vibrateur sismique selon l'une quelconque des revendications précédentes, dans lequel le stator unique comprend un réseau de bobines (130.1, 230.1, 420.1) disposées dans la première direction et le moteur comprend un réseau d'aimants permanents (130.21, 230.22, 314, 410.1, 510.1) disposés dans la première direction.

7. Vibrateur sismique selon l'une quelconque des revendications précédentes, comprenant un isolateur de vibrations, dans lequel le moteur sert de masse de réaction et est supporté par la plaque de base par le biais de l'isolateur de vibrations et facultativement, dans lequel l'isolateur de vibrations comprend un support de gaz.

8. Vibrateur sismique selon la revendication 7, dans lequel l'isolateur de vibrations comprend une pluralité d'isolateurs de vibrations agencés sur la plaque de base.

9. Vibrateur sismique selon l'une quelconque des revendications précédentes, comprenant en outre une alimentation électrique pour alimenter le moteur électromagnétique et une unité de commande pour commander l'alimentation électrique, dans lequel l'unité de commande est configurée pour commander l'alimentation électrique pour réaliser un balayage de fréquence et facultativement, dans lequel la réalisation d'un balayage de fréquence comprend la génération d'une force par le moteur électromagnétique, la force ayant une fréquence variable en fonction du balayage de fréquence.

10. Vibrateur sismique selon la revendication 9, dans lequel l'unité de commande est configurée pour effectuer le balayage de fréquence en superposant un déplacement à faible fréquence au balayage de fréquence et facultativement, dans lequel le déplacement à faible fréquence a une fréquence qui est inférieure à une fréquence la plus basse du balayage de fréquence.

11. Vibrateur sismique selon la revendication 10, comprenant un isolateur de vibrations, dans lequel le moteur sert de masse de réaction et est supporté par la plaque de base par le biais de l'isolateur de vibrations, dans lequel l'isolateur de vibrations et la masse de réaction forment un système dynamique ayant une fréquence propre,
dans lequel le déplacement à faible fréquence a une fréquence sensiblement égale à la fréquence propre et facultativement,
dans lequel le déplacement à faible fréquence comprend un déplacement non sinusoïdal du moteur par rapport au stator et/ou le déplacement à faible fréquence a une amplitude égale ou supérieure à un demi-pas magnétique du moteur électromagnétique.

12. Vibrateur sismique selon l'une quelconque des revendications 9 à 11, dans lequel l'alimentation électrique est une alimentation électrique triphasée.

13. Vibrateur sismique selon l'une quelconque des revendications 9 à 12, comprenant en outre un premier capteur de mouvement monté sur le moteur et/ou un second capteur de mouvement monté sur le stator.

14. Vibrateur sismique selon l'une quelconque des revendications précédentes, comprenant en outre un système de mesure de position configuré pour générer un signal de position représentant une position du moteur par rapport au stator dans la direction verticale.

15. Vibrateur sismique selon la revendication 13, dans lequel l'unité de commande est configurée pour commander l'alimentation électrique sur la base d'un signal de capteur de mouvement reçu depuis le premier capteur de mouvement et/ou depuis le second capteur de mouvement et facultativement, dans lequel l'unité de commande est configurée pour commander l'alimentation électrique sur la base du signal de position.
